# FASCICULE DE BREVET EUROPEEN

(11) **EP 4 347 316 B1**
(45) Date de publication et mention de la délivrance du brevet: **28.05.2025**
(21) Numéro de dépôt: 22726492.6
(22) Date de dépôt: 29.04.2022
(51) Int. Cl.: B60R 11/02

(54) **SYSTÈME DE FIXATION D'UN DISPOSITIF ALIMENTÉ ÉLECTRIQUEMENT DANS UN HABITACLE DE VÉHICULE AUTOMOBILE**
SYSTEM ZUR BEFESTIGUNG EINER ELEKTRISCH ANGETRIEBENEN VORRICHTUNG IN EINEM KRAFTFAHRZEUGINNENRAUM
SYSTEM FOR ATTACHING AN ELECTRICALLY POWERED DEVICE INSIDE A MOTOR VEHICLE PASSENGER COMPARTMENT

(30) Priorité: 04.06.2021 FR 2105877
(43) Date de publication de la demande: 10.04.2024
(73) Titulaire: Stellantis Auto SAS, 78300 Poissy (FR)
(72) Inventeur: KERVAREC, Florian, 91310 LONGPONT SUR ORGE (FR); DUTOT, Christophe, 78140 VELIZY VILLACOUBLAY (FR); ZIBAT, Aicha, 20640 Casablanca (MA); DUVIVIER, Arnaud, 91190 GIF SUR YVETTE (FR); GAUTHIER, Jean Pierre, 94800 VILLEJUIF (FR)
(74) Mandataire: ESIP
(86) Numéro de dépôt international: PCT/FR2022/050824
(87) Numéro de publication internationale: WO 2022/254113

(56) Documents cités:
- WO-A1-2020/114664
- CN-A- 105 599 692
- CN-A- 105 599 693
- DE-A1- 102010 048 096
- FR-A1- 2 833 541

## Description

L'invention se rapporte au domaine des équipements de véhicules automobiles, et concerne plus précisément la fixation sur une planche de bord de véhicule automobile d'éléments divers devant être alimentés électriquement, tels qu'une prise électrique, un chargeur de téléphone, un porte-gobelet réfrigéré, etc.

La publication FR2833541A1 divulgue un système de fixation d'après le préambule de la revendication 1.

L'invention part de la constatation qu'il est aujourd'hui nécessaire d'offrir aux occupants d'un véhicule automobile souplesse et facilité dans l'utilisation de différents accessoires nomades ou portables dont ils disposent et qui nécessitent une alimentation électrique.

L'invention a ainsi pour but de proposer un système de fixation permettant la fixation d'accessoires et de modules devant être alimentés électriquement.

À cet effet, l'invention concerne un système de fixation pour la fixation dans un habitacle de véhicule automobile d'un module adaptateur, le système de fixation comportant :
- un rail de fixation, comportant un corps creux de forme allongée, destiné à être fixé à un élément d'habillage d'un véhicule automobile, tel qu'une planche de bord, le corps comportant deux conducteurs disposés respectivement le long d'une extrémité supérieure et d'une extrémité inférieure d'une cavité ménagée au sein du corps, la cavité communiquant avec une ouverture s'étendant le long du corps ;
- au moins un module adaptateur, le module adaptateur étant configuré pour être fixé au rail de fixation de façon amovible, le module adaptateur comportant un corps et deux contacts mobiles, mobiles en rotation par rapport au corps entre une position d'engagement dans laquelle ils permettent d'accoler le module adaptateur au rail de fixation en insérant les contacts mobiles au travers de l'ouverture, les contacts mobiles étant alors disposés au sein de la cavité du rail de fixation, et une position de fixation, ne permettant pas l'extraction des contacts mobiles de la cavité et dans laquelle une première extrémité de chaque contact mobile est en contact avec le conducteur correspondant du rail de fixation et reliée électriquement à celui-ci, permettant ainsi de connecter électriquement le module adaptateur et le rail de fixation.

Grâce à un rail de fixation intégrable dans un élément d'habillage d'un habitacle de véhicule automobile, le système de fixation conforme à l'invention offre aux occupants du véhicule une grande souplesse pour la fixation d'un ou plusieurs accessoires devant être à la fois fixés et connectés électriquement, tel qu'une prise électrique, un chargeur de dispositif électronique portable, etc. En prévoyant que la fixation au rail de fixation et la connexion électrique s'effectue au moyen des mêmes éléments, à savoir les contacts mobiles, l'invention permet de fixer et connecter électriquement un accessoire de manière simple et rapide. En prévoyant que les conducteurs du rail de fixation soient disposés au sein d'une cavité interne du rail de fixation, accessible uniquement par une ouverture dont la distance entre les deux bords sera avantageusement réduite, les conducteurs sont inaccessibles et sont protégés par la façade avant du rail. Le système conforme à l'invention présente ainsi un niveau de sécurité très élevé. Dans une réalisation, chaque contact mobile est solidaire d'un bras rotatif respectif, les bras rotatifs étant solidaires d'un levier de commande monté mobile en rotation dans le corps du module adaptateur.

Dans une réalisation, le levier de commande comporte deux extrémités opposées émergeant du corps au travers d'une fente respective.

Dans une réalisation, chaque contact mobile comporte une deuxième extrémité disposée dans le corps du module adaptateur et configurée pour être en contact avec un conducteur interne respectif lorsque les contacts mobiles sont en position de fixation.

Dans une réalisation, le corps du module adaptateur comporte une cage partiellement ouverte, à l'intérieur de laquelle les contacts mobiles sont rétractés lorsqu'ils sont en position d'engagement, la cage étant configurée pour être insérée à l'intérieur de la cavité par l'intermédiaire de l'ouverture.

Dans une réalisation, le corps du rail de fixation comporte, sur une paroi arrière délimitant la cavité, une rainure disposée au droit de l'ouverture, dans laquelle la cage est partiellement insérée lorsque le module adaptateur est fixé au rail de fixation.

Dans une réalisation, lorsque le module adaptateur forme un socle de prise électrique, chaque conducteur interne du corps est relié électriquement à une borne respective.

Dans une réalisation, les conducteurs du rail de fixation comportent chacun une lamelle souple et/ou sont montés sur un système de rappel élastique comportant par exemple une pluralité de ressorts.

Dans une réalisation, le corps du module adaptateur comporte un système d'indexation du levier de commande dans une position correspondant à la position de fixation des contacts mobiles et/ou dans une position correspondant à la position d'engagement des contacts mobiles.

L'invention concerne également un véhicule automobile comportant un système de fixation conforme à celui défini ci-dessus, le rail de fixation étant fixé dans un élément d'habillage d'habitacle du véhicule, tel qu'une planche de bord, un panneau de porte ou une console, les conducteurs du rail de fixation étant raccordés à un réseau électrique de bord du véhicule.

La présente invention sera mieux comprise à la lecture de la description détaillée qui suit, faite en référence au dessins annexés, dans lesquels :
[Fig. 1] La figure 1 est vue partielle d'un habitacle de véhicule automobile comportant, le véhicule étant équipé d'un système de fixation conforme à l'invention.
[Fig. 2] La figure 2 est une vue en perspective d'un module adaptateur et d'une portion de rail de fixation, le module adaptateur n'étant pas connecté au rail de fixation.
[Fig. 3] La figure 3 est une vue partielle du rail de fixation sur lequel le module adaptateur de la figure 1 est en cours de connexion.
[Fig. 4] La figure 4 est une vue partielle du rail de fixation sur lequel le module adaptateur de la figure 1 est connecté
[Fig. 5] La figure 5 est une vue en coupe du rail de fixation sur lequel le module adaptateur de la figure 1 est en cours de connexion.
[Fig. 6] La figure 6 une vue en coupe du rail de fixation sur lequel le module adaptateur de la figure 1 est connecté.
[Fig. 7] La figure 7 est une vue partielle en perspective du levier en position d'engagement.
[Fig. 8] La figure 8 est une vue partielle en perspective du levier en position de connexion.

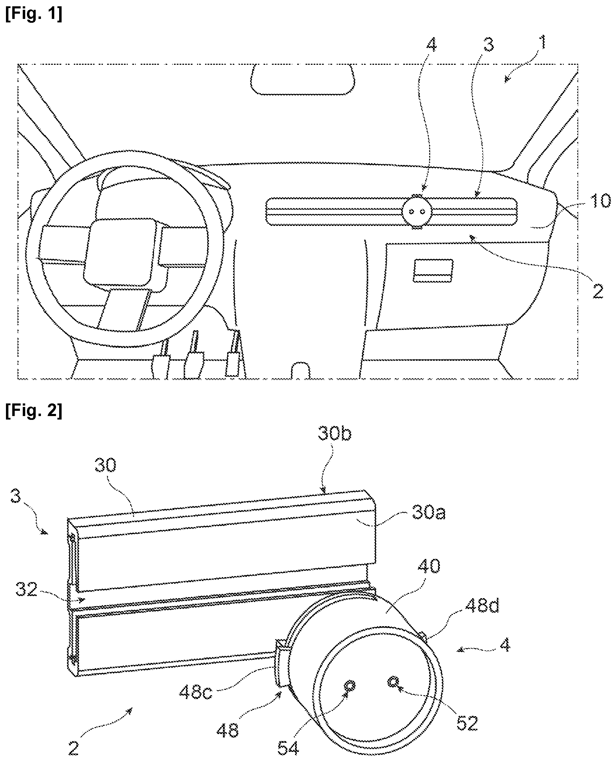

La figure 1 représente partiellement un habitacle d'un véhicule 1 automobile. Le véhicule 1 comporte une planche de bord 10. La planche de bord 10 est équipée d'un système de fixation 2 conforme à l'invention, permettant de fixer simultanément sur un rail de fixation 3 un ou plusieurs modules adaptateurs, tel que le module adaptateur 4 formant une prise électrique pour l'alimentation d'un dispositif électronique portable ou nomade, tel qu'un ordinateur portable.

On décrit ci-après, en relation avec les figures 2 à 8, le fonctionnement du système de fixation conforme à l'invention.

La figure 2 est une vue en perspective du module adaptateur 4 de la figure 1 non accouplé au rail de fixation 3 dont seule une section est représentée.

Le rail de fixation 3 comporte un corps 30 creux. Le corps 30 comporte une face avant 30a et une face arrière 30b. Le corps 30 comporte sur sa face avant une ouverture 32 s'étendant le long du rail de fixation 30 et communiquant sur toute sa longueur avec une cavité 34 ménagée à l'intérieur du corps 30. La cavité 34 est délimitée notamment par une paroi avant 34a et par une paroi arrière 34b. Une rainure 34c est ménagée dans la paroi arrière 34b, au droit de l'ouverture 32. L'ouverture 32 et la rainure 34c présentent des dimensions analogues et sont conformées pour recevoir une partie du module adaptateur 4 lorsque ce dernier est connecté au rail de fixation 30, comme il est décrit plus en détail ci-après. L'ouverture 32 présente une distance entre ses deux bords réduite par rapport à la dimension de la cavité 34 mesurée selon une même direction.

À une extrémité supérieure de la cavité 34 est disposé un premier conducteur 36 électrique. À une extrémité inférieure de la cavité 34 est disposé un deuxième conducteur 38 électrique. Dans l'exemple les premier et deuxième contacts 36, 38 sont montés sur des ressorts 36b, 38b.

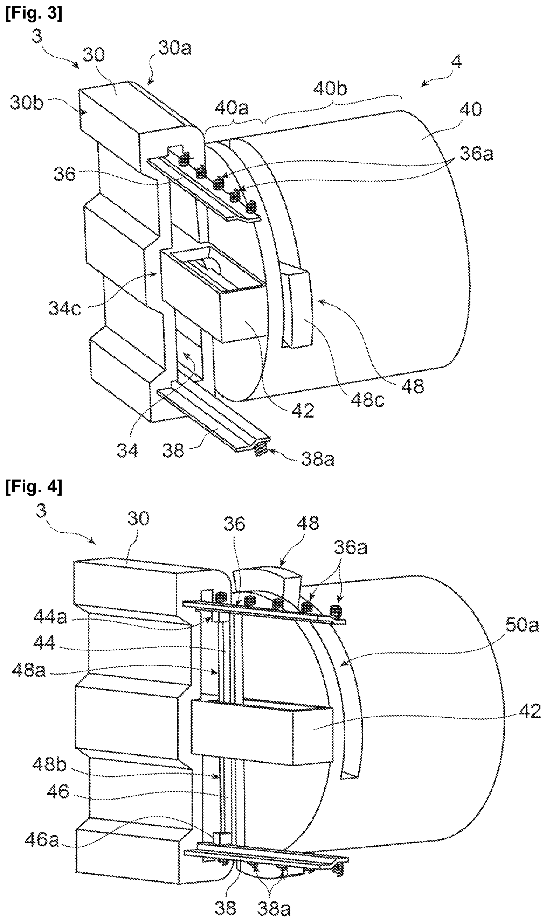

Comme visible sur les figures 3 à 6, Le module adaptateur 4 comporte un corps 40. Le corps 40 comporte une première partie, ou partie avant 40a, servant à la fixation et à la connexion électrique du module adaptateur 4 sur le rail de fixation 30, et une deuxième partie, ou partie arrière 40b, qui est une partie fonctionnelle, et qui forme dans l'exemple un socle de prise électrique.

Le corps 40 est solidaire sur sa partie avant 40a d'une cage 42, formant une saillie depuis le corps 40 et configurée pour être insérée dans l'ouverture 32 et dans la rainure 34c lorsque le module adaptateur 4 est fixé au rail de fixation 30. La cage 42 permet notamment d'assurer le positionnement du module adaptateur sur le rail de fixation 3

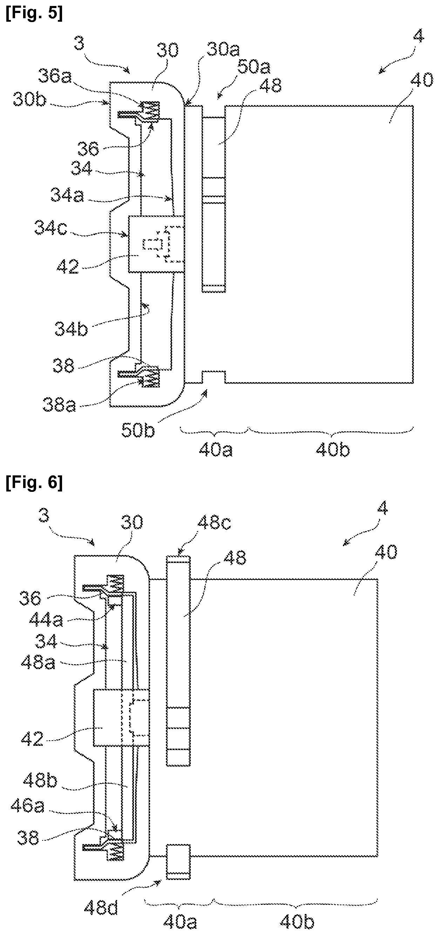

La cage 42 est partiellement ouverte, et configurée pour contenir deux contacts mobiles 44, 46, mobiles en rotation entre une position d'engagement (visible sur les figures 3 et 5), dans laquelle ils sont rétractés à l'intérieur de la cage 42 et peuvent ainsi être insérés dans la cavité 34 à travers l'ouverture 32, et une position de fixation (visible sur les figures 4 et 6), dans laquelle ils sont déployés hors de la cage 42 pour être en contact respectivement avec l'un des conducteurs 36, 38 du rail de fixation 3. Dans l'exemple, une rotation de 90° permet de passer de la position d'engagement à la position de fixation et inversement.

Chaque contact mobile 44, 46 est monté sur un bras rotatif 48a, 48b respectif solidaire chacun d'un levier de commande 48 rotatif. Le levier 48 est disposé à l'intérieur du corps 40 et comporte deux extrémités 48c, 48d de manœuvre, accessible à la manipulation par un utilisateur, ces extrémités émergeant du corps 40 au travers d'une fente 50a, 50b respective ménagée dans le corps 40. Chaque contact mobile 44, 46 comporte une première extrémité 44a, 46a destinée à être en contact et reliée électriquement avec le conducteur 36, 38 correspondant du rail de fixation 3.

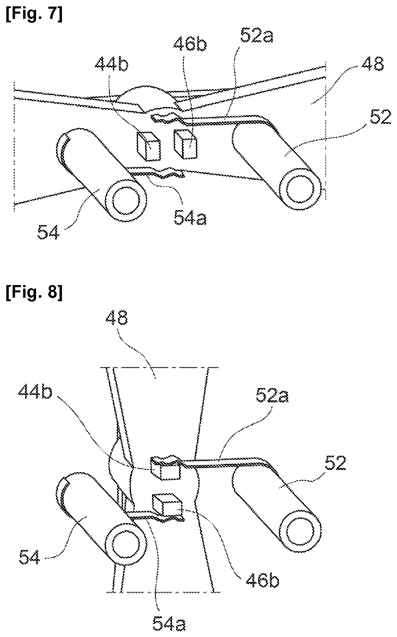

Chaque contact mobile 44, 46 comporte une deuxième extrémité 44a, 46b, disposée au sein du corps 40 et disposée dans l'exemple sur le levier de commande 48, et destinée à être en contact et reliée électriquement avec un conducteur interne 52a, 54a respectif, lorsque les contacts mobiles sont en position de fixation, comme visible sur la figure 8. Avantageusement, les deuxièmes extrémités 44b, 46b des contacts mobiles 44, 46 sont configurées pour ne pas être reliées électriquement aux conducteurs internes 52a, 54a lorsque les contacts mobiles sont en position d'engagement, comme montré sur la figure 7. De préférence, les conducteurs internes 52a, 54a comportent une partie de contact formant une lamelle souple.

Dans l'exemple des figures, dans lesquelles le module adaptateur 4 forme un socle de prise électrique, chaque conducteur interne 52a, 54a est respectivement relié électriquement à l'une de deux bornes électriques 52, 54 de la prise, comme visible sur les figures 7 et 8.

La configuration du rail de fixation et du module adaptateur 4 permettent une connexion à la fois simple et sécurisée.

Comme visible sur les figures 3 à 6, il est simplement requis, pour fixer un module adaptateur 4 sur le rail de fixation 3, que les contacts mobiles 44, 46 soient dans leur position d'engagement. Les contacts mobiles 44, 46, étant dans cette position, il suffit alors d'approcher le module adaptateur 4 du rail de fixation 3 et d'insérer la cage 42 du corps 40 dans l'ouverture 32 du rail de fixation 3, jusqu'à ce que la cage 42 soit au fond de la rainure 34c disposée au droit de l'ouverture 32. Le module adaptateur 4 se trouve alors accolé au rail de fixation, et il suffit de faire tourner de 90° le levier de commande 48, pour amener les contacts mobiles 44, 46 dans leur position de fixation. Dans cette position, comme visible sur les figures 4 et 6, les contacts mobiles 44, 46 sont en contact avec les conducteurs 36, 38 du rail de fixation 3, assurant ainsi une connexion électrique entre le rail de fixation 3 et le module adaptateur 4. La fixation du module adaptateur 4 sur le rail de fixation 3 se trouve également assurée. Le montage des conducteurs 36, 38 sur un système de rappel élastique permet d'assurer un verrouillage des contacts mobiles 44, 46 en position de fixation. Alternativement ou en complément, on pourra prévoir une indexation de la position du levier de commande 48, par exemple au moyen d'un système d'indexation comportant une bille montée sur ressort. Pour retirer le module adaptateur 4 du rail de fixation 3, il suffit simplement de tourner le levier de commande 48 en sens inverse, afin de faire passer les contacts mobiles 44, 46 à leur position d'engagement, puis de retirer le module adaptateur 4.

Le système de fixation décrit ci-dessus permet d'assurer facilement et simplement la fixation et la connexion électrique d'un module adaptateur au rail de fixation. En prévoyant que les contacts électriques 36, 38 du rail de fixation 3 sont logés au sein de la cavité 34, on rend ces conducteurs inaccessibles à un utilisateur. Avantageusement, l'ouverture 32 sera dimensionnée afin d'empêcher un utilisateur d'y insérer un doigt. Le système conforme à l'invention présente donc à la fois une grande souplesse et une grande facilité d'utilisation, tout en assurant un haut degré de sécurité pour les utilisateurs.

## Revendications

1. Système de fixation (2) pour la fixation dans un habitacle de véhicule (1) automobile d'un module adaptateur, le système de fixation (2) comportant :
- un rail de fixation (3), comportant un corps (30) creux de forme allongée, destiné à être fixé à un élément d'habillage d'un véhicule (1) automobile, tel qu'une planche de bord (10), le corps (30) comportant deux conducteurs (36, 38) disposés respectivement le long d'une extrémité supérieure et d'une extrémité inférieure d'une cavité (34) ménagée au sein du corps (30), la cavité (34) communiquant avec une ouverture (32) s'étendant le long du corps (30);
- au moins un module adaptateur (4), le module adaptateur (4) étant configuré pour être fixé au rail de fixation (3) de façon amovible, le module adaptateur comportant un corps (40) et deux contacts mobiles (44, 46), **caractérisé en ce que** les deux contacts mobiles (44, 46) sont mobiles en rotation par rapport au corps (40) entre une position d'engagement dans laquelle ils permettent d'accoler le module adaptateur (4) au rail de fixation (3) en insérant les contacts mobiles (44, 46) au travers de l'ouverture (32), les contacts mobiles (44, 46) étant alors disposés au sein de la cavité (34) du rail de fixation (3), et une position de fixation, ne permettant pas l'extraction des contacts mobiles (44, 46) de la cavité (34) et dans laquelle une première extrémité (44a, 46a) de chaque contact mobile (44, 46) est en contact avec le conducteur (36, 38) correspondant du rail de fixation (3) et reliée électriquement à celui-ci, permettant ainsi de connecter électriquement le module adaptateur (4) et le rail de fixation (3).

2. Système de fixation (2) selon la revendication précédente, dans lequel chaque contact mobile (44, 46) est solidaire d'un bras rotatif (48a, 48b) respectif, les bras rotatifs (48a, 48b) étant solidaires d'un levier de commande (48) monté mobile en rotation dans le corps (40) du module adaptateur (4).

3. Système de fixation (2) selon la revendication précédente, dans lequel le levier de commande (48) comporte deux extrémités opposées (48c, 48d) émergeant du corps (40) au travers d'une fente (50a, 50b) respective.

4. Système de fixation (2) selon l'une des revendications précédentes, dans lequel chaque contact mobile (44, 46) comporte une deuxième extrémité (44b, 46b) disposée dans le corps (40) du module adaptateur (40) et configurée pour être en contact avec un conducteur interne (52a, 54a) respectif lorsque les contacts mobiles (44, 46) sont en position de fixation.

5. Système de fixation (2) selon l'une des revendications précédentes, dans lequel le corps (40) du module adaptateur (4) comporte une cage (42) partiellement ouverte, à l'intérieur de laquelle les contacts mobiles (44, 46) sont rétractés lorsqu'ils sont en position d'engagement, la cage (42) étant configurée pour être insérée à l'intérieur de la cavité (34) par l'intermédiaire de l'ouverture (32).

6. Système de fixation (2) selon la revendication précédente, dans lequel le corps (30) du rail de fixation (3) comporte, sur une paroi arrière (34b) délimitant la cavité (34), une rainure (34c) disposée au droit de l'ouverture (32), dans laquelle la cage (42) est partiellement insérée lorsque le module adaptateur (4) est fixé au rail de fixation (3).

7. Système de fixation (2) selon l'une des revendications 4 à 6, dans lequel, lorsque le module adaptateur (4) forme un socle de prise électrique, chaque conducteur interne (52a, 54a) du corps (40) est relié électriquement à une borne (52, 54) respective

8. Système de fixation (2) selon l'une des revendications précédentes, dans lequel les conducteurs (36, 38) du rail de fixation (3) comportent chacun une lamelle souple et/ou sont montés sur un système de rappel élastique comportant par exemple une pluralité de ressorts (36a, 38a).

9. Système de fixation (2) selon l'une des revendications 2 à 8, dans lequel le corps (40) du module adaptateur (4) comporte un système d'indexation du levier de commande (48) dans une position correspondant à la position de fixation des contacts mobiles (44, 46) et/ou dans une position correspondant à la position d'engagement des contacts mobiles (44, 46).

10. Véhicule (1) automobile comportant un système de fixation (2) conforme à l'une des revendications précédentes, le rail de fixation (3) étant fixé dans un élément d'habillage (10) d'habitacle du véhicule (1), tel qu'une planche de bord, un panneau de porte ou une console, les conducteurs (36, 38) du rail de fixation (3) étant raccordés à un réseau électrique de bord du véhicule (1).

## Patentansprüche

1. Befestigungssystem (2) zur Befestigung eines Adaptermoduls in einem Fahrzeuginnenraum (1), wobei das Befestigungssystem (2) umfasst:
- eine Befestigungsschiene (3) mit einem länglichen Hohlkörper (30) zur Befestigung an einem Verkleidungselement eines Kraftfahrzeugs (1), wie einem Armaturenbrett (10), wobei der Körper (30) zwei Leiter (36, 38) aufweist, die jeweils entlang eines oberen und eines unteren Endes einer Ausnehmung (34) im Körper (30) angeordnet sind, wobei die Ausnehmung (34) mit einer sich entlang des Körpers (30) erstreckenden Öffnung (32) in Verbindung steht;
- mindestens einem Adaptermodul (4), wobei das Adaptermodul (4) zur lösbaren Befestigung an der Befestigungsschiene (3) ausgebildet ist, wobei das Adaptermodul einen Körper (40) und zwei bewegliche Kontakte (44, 46) aufweist, **dadurch gekennzeichnet, dass** die beiden beweglichen Kontakte (44, 46) bezüglich des Körpers (40) zwischen einer Eingriffsposition drehbar sind, in der sie die Befestigung des Adaptermoduls (4) an der Befestigungsschiene (3) durch Einsetzen der beweglichen Kontakte (44, 46) durch die Öffnung (32), die beweglichen Kontakte (44) ermöglichen, 46) innerhalb des Hohlraums (34) der Befestigungsschiene (3) angeordnet sind und eine Befestigungsposition, die das Herausziehen der beweglichen Kontakte (44, 46) aus dem Hohlraum (34) nicht zulässt und in der ein erstes Ende (44a, 46a) jedes beweglichen Kontakts (44, 46) mit dem entsprechenden Leiter (36, 38) der Befestigungsschiene (3) in Kontakt steht und mit diesem elektrisch verbunden ist, wodurch das Adaptermodul (4) und die Befestigungsschiene (3) elektrisch verbunden werden.

2. Befestigungssystem (2) nach dem vorhergehenden Anspruch, bei dem jeder bewegliche Kontakt (44, 46) mit einem entsprechenden Dreharm (48a, 48b) einstückig ist, wobei die Dreharme (48a, 48b) mit einem Steuerhebel (48) einstückig sind, der drehbar in dem Körper (40) des Adaptermoduls (4) montiert ist.

3. Befestigungssystem (2) nach dem vorhergehenden Anspruch, bei dem der Steuerhebel (48) zwei gegenüberliegende Enden (48c, 48d) aufweist, die von dem Körper (40) durch einen entsprechenden Schlitz (50a, 50b) austreten.

4. Befestigungssystem (2) nach einem der vorhergehenden Ansprüche, bei dem jeder bewegliche Kontakt (44, 46) ein zweites Ende (44b, 46b) aufweist, das in dem Körper (40) des Adaptermoduls (40) angeordnet ist und so konfiguriert ist, dass es mit einem jeweiligen internen Leiter (52a, 54a) in Kontakt kommt, wenn sich die beweglichen Kontakte (44, 46) in der Befestigungsposition befinden.

5. Befestigungssystem (2) nach einem der vorhergehenden Ansprüche, bei dem der Körper (40) des Adaptermoduls (4) einen teilweise offenen Käfig (42) aufweist, in den die beweglichen Kontakte (44, 46) zurückgezogen werden, wenn sie sich in der Eingriffsposition befinden, wobei der Käfig (42) so konfiguriert ist, dass er durch die Öffnung (32) in den Hohlraum (34) eingesetzt werden kann.

6. Befestigungssystem (2) nach dem vorhergehenden Anspruch, bei dem der Körper (30) der Befestigungsschiene (3) an einer den Hohlraum (34) begrenzenden Rückwand (34b) eine Nut (34c) aufweist, die an der Öffnung (32) angeordnet ist, in die der Käfig (42) teilweise eingesetzt ist, wenn das Adaptermodul (4) an der Befestigungsschiene (3) befestigt ist.

7. Befestigungssystem (2) nach einem der Ansprüche 4 bis 6, bei dem, wenn das Adaptermodul (4) eine elektrische Steckdose bildet, jeder innere Leiter (52a, 54a) des Körpers (40) elektrisch mit einem entsprechenden Anschluss (52, 54) verbunden ist.

8. Befestigungssystem (2) nach einem der vorhergehenden Ansprüche, bei dem die Leiter (36, 38) der Befestigungsschiene (3) jeweils eine flexible Lamelle aufweisen und/oder an einem elastischen Rückstellsystem angebracht sind, das beispielsweise eine Vielzahl von Federn (36a, 38a) aufweist.

9. Befestigungssystem (2) nach einem der Ansprüche 2 bis 8, bei dem der Körper (40) des Adaptermoduls (4) ein System zum Indexieren des Betätigungshebels (48) in einer Position, die der Befestigungsposition der beweglichen Kontakte (44, 46) entspricht, und/oder in einer Position, die der Eingriffsposition der beweglichen Kontakte (44, 46) entspricht, aufweist.

10. Kraftfahrzeug (1) mit einem Befestigungssystem (2) nach einem der vorhergehenden Ansprüche, wobei die Befestigungsschiene (3) in einem Innenraumverkleidungselement (10) des Fahrzeugs (1), wie einem Armaturenbrett, einer Türblende oder einer Konsole, befestigt ist, wobei die Leiter (36, 38) der Befestigungsschiene (3) an ein elektrisches Bordnetz des Fahrzeugs (1) angeschlossen sind.

## Claims

1. Fastening system (2) for the fastening of an adapter module in a vehicle passenger compartment (1), the fastening system (2) comprising:
- a fastening rail (3), comprising a hollow body (30) of elongated shape, intended to be fastened to a trim element of a motor vehicle (1), such as a dashboard (10), the body (30) comprising two conductors (36, 38) arranged respectively along an upper end and a lower end of a cavity (34) made within the body (30), the cavity (34) communicating with an opening (32) extending along the body (30);
- at least one adapter module (4), the adapter module (4) being configured to be removably fixed to the fastening rail (3), the adapter module comprising a body (40) and two movable contacts (44, 46), **characterized in that** the two movable contacts (44, 46) are movable in rotation relative to the body (40) between an engagement position in which they make it possible to adhere the adapter module (4) to the fastening rail (3) by inserting the movable contacts (44, 46) through the opening (32), the movable contacts (44, 46) are then arranged within the cavity (34) of the fastening rail (3), and a fastening position, which does not allow extraction of the movable contacts (44, 46) from the cavity (34) and in which a first end (44a, 46a) of each movable contact (44, 46) is in contact with the corresponding conductor (36, 38) of the fastening rail (3) and electrically connected thereto, thus making it possible to electrically connect the adapter module (4) and the fastening rail (3).

2. Fastening system (2) according to the preceding claim, in which each movable contact (44, 46) is integral with a respective rotary arm (48a, 48b), the rotary arms (48a, 48b) being integral with a control lever (48) mounted so as to be movable in rotation in the body (40) of the adapter module (4).

3. Fastening system (2) according to the preceding claim, in which the control lever (48) comprises two opposite ends (48c, 48d) emerging from the body (40) through a respective slot (50a, 50b).

4. Fastening system (2) according to one of the preceding claims, in which each movable contact (44, 46) comprises a second end (44b, 46b) arranged in the body (40) of the adapter module (40) and configured to be in contact with a respective internal conductor (52a, 54a) when the movable contacts (44, 46) are in the fastening position.

5. Fastening system (2) according to one of the preceding claims, in which the body (40) of the adapter module (4) comprises a partially open cage (42), inside which the movable contacts (44, 46) are retracted when they are in the engagement position, the cage (42) being configured to be inserted inside the cavity (34) via the opening (32).

6. Fastening system (2) according to the preceding claim, in which the body (30) of the fastening rail (3) comprises, on a rear wall (34b) delimiting the cavity (34), a groove (34c) arranged in line with the opening (32), in which the cage (42) is partially inserted when the adapter module (4) is fastened to the fastening rail (3).

7. Fastening system (2) according to one of claims 4 to 6, in which, when the adapter module (4) forms an electrical socket base, each internal conductor (52a, 54a) of the body (40) is electrically connected to a respective terminal (52, 54)

8. A fastening system (2) according to claim 1, in which the conductors (36, 38) of the fastening rail (3) each comprise a flexible strip and/or are mounted on a resilient return system comprising, for example, a plurality of springs (36 a, 38 a).

9. Fastening system (2) according to one of Claims 2 to 8, in which the body (40) of the adapter module (4) comprises a system for indexing the control lever (48) in a position corresponding to the position for fastening the movable contacts (44, 46) and/or in a position corresponding to the position for engaging the movable contacts (44, 46).

10. Motor vehicle (1) comprising a fastening system (2) according to one of the preceding claims, the fastening rail (3) being fastened in a trim element (10) of the passenger compartment of the vehicle (1), such as a dashboard, a door panel or a bracket, the conductors (36, 38) of the fastening rail (3) being connected to an electrical network on board the vehicle (1).
